# EUROPEAN PATENT SPECIFICATION

(11) **EP 1 596 074 B1**
(45) Date of publication and mention of the grant of the patent: **30.07.2008**
(21) Application number: 05104032.7
(22) Date of filing: 13.05.2005
(51) Int. Cl.: F15B 13/00, F16K 17/04, B62D 5/06

(54) **Hydraulic circuit with a dual-function valve**
Hydraulikkreis mit einem Ventil mit doppelter Funktion
Circuit hydraulique avec une soupape à double fonction

(30) Priority: 14.05.2004 EP 04425349
(43) Date of publication of application: 16.11.2005
(73) Proprietor: TRW Automotive Italia S.p.A, 10129 Torino (IT)
(72) Inventor: Albieri, Michele, 44035, Formignana (IT); Zambardi, Roberto, 44025, Massafiscaglia (IT); Barboni, Lorenzo, 44021, Codigoro (IT); Bertelli, Maurizio, 44025, Massafiscaglia (IT)
(74) Representative: Jorio, Paolo

(56) References cited:
- DE-A- 19 600 275
- US-A- 3 554 214
- US-A1- 2003 205 278

## Description

The present invention relates to a hydraulic circuit with a dual-function valve.

The present invention may be used to particular advantage in an automotive steering assembly, to which the following description refers purely by way of example.

Known steering assemblies normally comprise a pump unit for pumping pressurized oil from a tank to a hydraulic steering system; and a dual-function valve in parallel with the pump unit and for ensuring oil supply from the tank to the hydraulic steering system in the event the pump unit breaks down, and also for draining oil from the pump unit into the tank when the pressure of the oil supply to the hydraulic steering system substantially equals a given threshold value.

Document US-A-3554214 discloses a hydraulic circuit comprising a tank for a fluid, a pump unit for pumping the fluid from the tank to a hydraulic motor, and a dual-function valve comprising a valve body and a first and a second shutter member mounted to slide inside the valve body and normally positioned respectively in a first and a second closed position closing the valve.

The first shutter member is movable from the first closed position into a first open position opening the valve, in the event of breakdown of the pump unit, to ensure supply of the fluid from the tank to the hydraulic motor; and the second shutter member is movable from the second closed position into a second open position when the pressure value of the fluid supplied by the pump unit to the hydraulic motor substantially equals a threshold value, so as to drain the fluid from the pump unit into the tank.

The second shutter member has the form of a valve disc surrounding the valve seat and thus acting as a flow diverting means for at least partly diverting the fluid from a first direction parallel to the longitudinal axis of the valve body to a second direction diverging from the first direction.

Known steering assemblies of the above type have various drawbacks, mainly due to comprising relatively complex, high-cost dual-function valves.

It is an object of the present invention to provide a hydraulic circuit with a dual-function valve, designed to eliminate the aforementioned drawbacks, and which is cheap and easy to produce.

According to the present invention, there is provided a hydraulic circuit with a dual-function valve, as claimed in Claim 1.

A non-limiting embodiment of the present invention will be described by way of example with reference to the accompanying drawings, in which:
Figure 1 shows, schematically, an automotive steering assembly featuring a preferred embodiment of the hydraulic circuit according to the present invention;
Figure 2 shows a longitudinal section of a dual-function valve which does not form part of the invention;
Figure 3 shows a longitudinal section of a dual-function valve according to the invention.

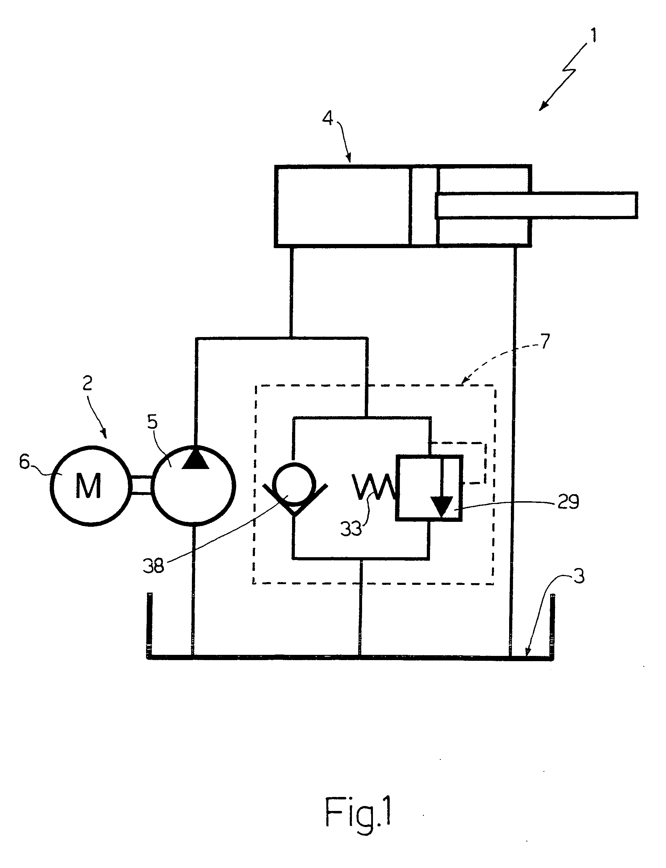

Number 1 in Figure 1 indicates as a whole an automotive steering assembly comprising a known pump unit 2 for pumping pressurized oil from a tank 3 at atmospheric pressure to a known hydraulic steering system 4, and which in turn comprises a pump 5, and a motor 6 for powering pump 5.

Steering assembly 1 also comprises a dual-function valve 7 mounted between tank 3 and hydraulic steering system 4, and in parallel with unit 2.

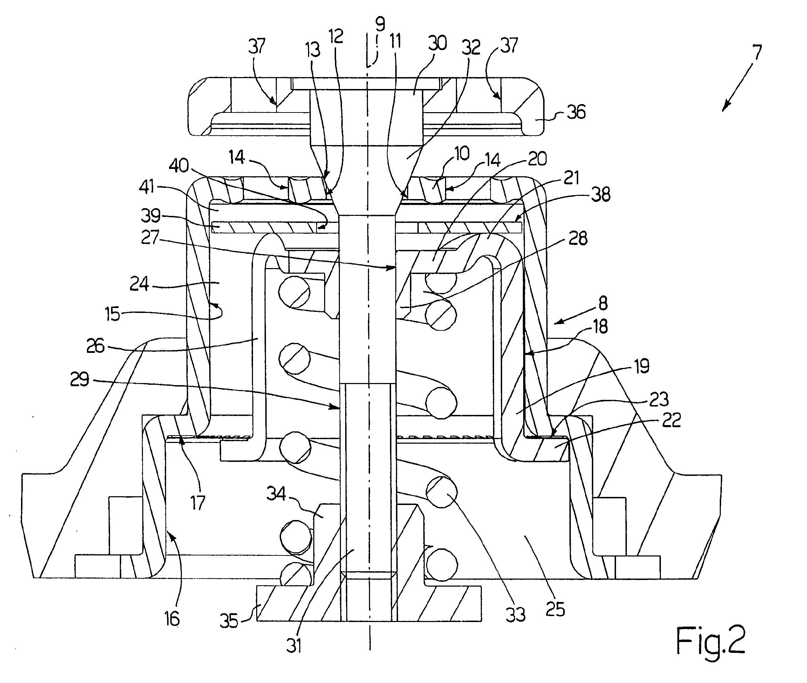

As shown in Figure 2, valve 7 comprises a substantially cup-shaped valve body 8 having a substantially vertical longitudinal axis 9 and positioned with its concavity facing downwards.

Valve body 8 is bounded axially by an end wall 10 substantially perpendicular to axis 9 and having a central hole 11, which is coaxial with axis 9 and comprises a substantially cylindrical bottom portion 12, and a top portion 13 converging with portion 12 and bounded internally by an annular surface with its convexity facing axis 9. Wall 10 also comprises a number of lateral holes 14 formed, parallel to axis 9, through wall 10 and equally spaced about axis 9.

Valve body 8 comprises a narrow top portion 15 and a wide bottom portion 16 connected to each other at a knurled surface 17 perpendicular to axis 9, and houses a substantially cup-shaped guide member 18 coaxial with axis 9 and positioned with its concavity facing downwards.

Member 18 is bounded laterally by a cylindrical wall 19 of a diameter approximately equal to but no larger than a diameter of portion 15, and is bounded axially by an end wall 20 substantially perpendicular to axis 9 and connected to wall 19 at an annular flange 21, which projects from wall 20 coaxially with axis 9.

At its free end, member 18 has a flat annular flange 22 which projects radially outwards from wall 19, contacts surface 17, when member 18 is inserted axially inside portion 15, and is bounded axially by a knurled surface 23 perpendicular to axis 9, facing surface 17, and cooperating with surface 17 to lock member 18 angularly about axis 9.

Member 18 and valve body 8 define a top chamber 24 and a bottom chamber 25, which communicate hydraulically with each other via a number of slits 26 formed through wall 19 and flange 21, and parallel to and equally spaced about axis 9.

Wall 20 has a central through hole 27 coaxial with axis 9; and a cylindrical collar 28 projecting downwards from wall 20 and aligned with hole 27. Hole 27 and collar 28 are engaged in sliding manner by a shutter member 29 mounted coaxially with axis 9 and comprising a wide, substantially cylindrical top portion 30 projecting outside valve body 8; a narrow, substantially cylindrical bottom portion 31 inside valve body 8; and a substantially truncated-cone-shaped intermediate portion 32 for engaging hole 11.

Member 29 is normally maintained in a lowered position closing hole 11 (Figure 2) by a spring 33 fitted to portion 31 and interposed between end wall 20 of member 18 and a set nut 34, which is screwed to portion 31 to selectively preload spring 33, and has a head 35 perpendicular to axis 9 and for shielding spring 33 from the pressurized oil flow from unit 2.

Member 29 also comprises a plate 36 fixed to portion 30, perpendicularly to axis 9, to radially divert at least part of the oil flow issuing from hole 11, and having a number of through holes 37 parallel to and equally spaced about axis 9.

Valve 7 also comprises a shutter member 38, in turn comprising an annular plate 39, which is mounted between walls 10 and 20, coaxially with axis 9, is positioned facing holes 14, and extends about member 29 to define, with member 29, a central feed channel 40, which is offset radially with respect to holes 14, and connects chamber 24 to a variable-volume chamber 41 defined between plate 39 and wall 10. Member 38 is fitted in sliding manner to both member 29 and valve body 8, and is normally maintained in a raised position (not shown) closing holes 14 by the pressured oil supplied to valve 7 by unit 2.

Operation of steering assembly 1 will now be described with reference to Figures 1 and 2, and as of when motor 6 powering pump 5 has been turned on, and pump 5 pumps pressurized oil to hydraulic steering system 4, to chamber 25, and, through slits 26, to chamber 24 to keep shutter member 38 in the raised closed position (not shown).

Spring 33 is preloaded by set nut 34 to keep shutter member 29 in the lowered position (Figure 2) closing hole 11 with a force greater than that exerted in the opposite direction on member 29 by the oil pressure in chamber 25 when steering assembly 1 is operating normally, but lower than the force exerted on member 29 when the oil pressure in chamber 25 is substantially equal to a given threshold value.

Consequently, when the oil pressure in chamber 25 substantially equals said threshold value, shutter member 29 moves into a raised position (not shown) opening hole 11, thus draining the oil from pump 5 into tank 3 and so restoring oil pressure to below the threshold value.

In the event unit 2 breaks down, so that no pressurized oil is supplied by pump 5 to hydraulic steering system 4 and chambers 24 and 25, shutter member 29 remains in the lowered position (Figure 2) closing hole 11, while shutter member 38 moves, by force of gravity or a vacuum in chambers 24, 25, into a lowered position (Figure 2) opening holes 14, and into contact with flange 21, to enable the oil in tank 3 to be supplied firstly into chamber 41 through holes 14, and then into chamber 25 through feed channel 40 and slits 26, and finally to hydraulic steering system 4 to ensure operation of steering assembly 1 even in the event of a breakdown of unit 2.

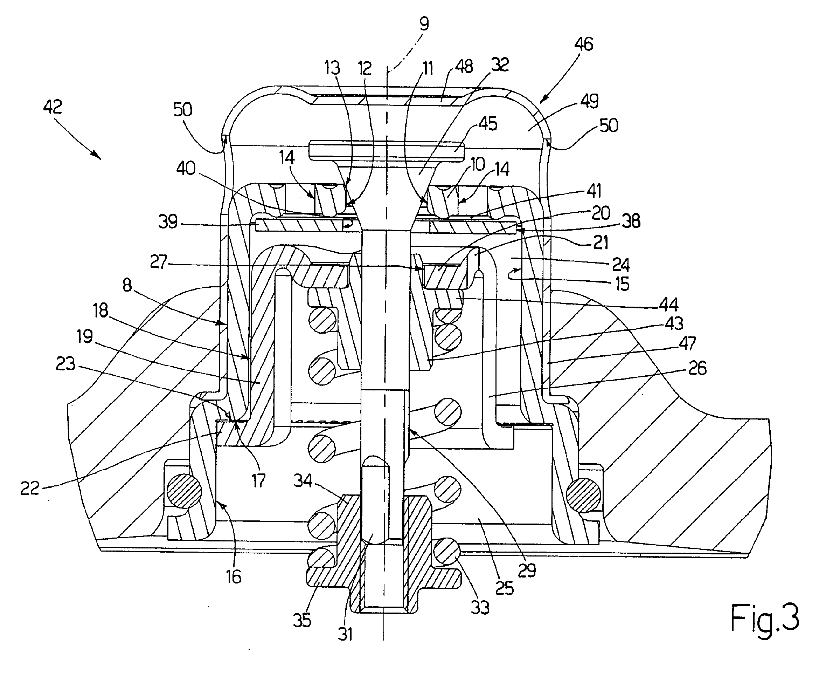

Figure 3 relates to a dual-function valve 42 according to the invention, which differs from valve 7 by collar 28 being replaced with a cylindrical bush 43, which extends through hole 27, coaxially with axis 9, engages hole 27 in axially and angularly fixed manner, and comprises a flat annular flange 44 projecting radially outwards from bush 43 and which contacts wall 20 when bush 43 is inserted axially inside hole 27.

Bush 43 is engaged internally in sliding manner by portion 31 of shutter member 29, and guides spring 33 so as to ensure a relatively high degree of stability of member 29 and spring 33.

Valve 42 also differs from valve 7 by portion 30 and plate 36 being replaced with a substantially cylindrical plate 45, which is formed in one piece with member 29 at a free end of portion 32, is located outside valve body 8, provides for radially diverting at least part of the oil flow from hole 11, and is smaller in diameter than plate 36 so as to have a relatively high degree of stability, greater than that of plate 36.

Valve 42 also differs from valve 7 by comprising a static flow deflector 46, in turn comprising a cup-shaped body 47, which is positioned with its concavity facing downwards, is fitted to the narrow top portion 15 of valve body 8, is locked axially and angularly to valve body 8, and is bounded at the top by a top wall 48 substantially perpendicular to axis 9 and at a given distance from wall 10.

Body 47 therefore defines, together with valve body 8, a substantially cylindrical storage chamber 49 housing plate 45 and communicating with tank 3 via a number of radial holes 50 formed through body 47 and equally spaced about axis 9.

## Claims

1. A hydraulic circuit for supplying fluid to a user device (4), the hydraulic circuit comprising a tank (3) for the fluid; a pump unit (2) for pumping the fluid from the tank (3) to the user device (4); and a dual-function valve (42) fitted between the tank (3) and the user device (4), in parallel with the pump unit (2), and comprising a valve body (8) having a given longitudinal axis (9), and a first and a second shutter member (38, 29) mounted to slide inside the valve body (8) and normally positioned respectively in a first and a second closed position closing the valve (42); the first shutter member (38) being movable from the first closed position into a first open position opening the valve (42), in the event of breakdown of the pump unit (2), to ensure supply of the fluid from the tank (3) to the user device (4); and the second shutter member (29) being movable from the second closed position into a second open position when the pressure value of the fluid supplied by the pump unit (2) to the user device (4) substantially equals a threshold value, so as to drain the fluid from the pump unit (2) into the tank (3); the valve (42) further comprising flow diverting means (45, 46) for at least partly diverting the fluid when the second shutter member (29) is in the second open position; and the hydraulic circuit being **characterized in that** the flow diverting means (45, 46) comprise a flow deflector (46) fixed to said valve body (8) and comprising a cup-shaped body (47) fitted to the valve body (8) to define, together with the valve body (8), a storage chamber (49) for said fluid.

2. A hydraulic circuit as claimed in Claim 1, wherein the flow deflector (46) also comprises at least one hole (50) formed through the cup-shaped body (47) to connect the storage chamber (49) hydraulically to the tank (3).

3. A hydraulic circuit as claimed in Claim 1 or 2, wherein the flow diverting means (36; 45; 46) comprise a plate (45), which is carried by said second shutter member (29), is perpendicular to said axis (9), and is housed inside the storage chamber (49).

4. A hydraulic circuit as claimed in any one of the foregoing Claims, wherein the valve body (8) is substantially cup-shaped, is bounded axially by an end wall (10) substantially perpendicular to said axis (9), and comprises a seat (11) formed through the end wall (10), coaxially with said axis (9), engaged in sliding manner by the second shutter member (29), and converging with said axis (9).

5. A hydraulic circuit as claimed in Claim 4, wherein at least part of the seat (11) is bounded internally by an annular surface having a convexity facing said axis (9).

6. A hydraulic circuit as claimed in Claim 4 or 5, wherein the second shutter member (29) comprises a substantially truncated-cone-shaped portion (32), which engages the seat (11) in fluidtight manner when the second shutter member (29) is in the second closed position.

7. An automotive steering assembly comprising a hydraulic steering system (4), and a hydraulic circuit for supplying oil to the hydraulic steering system (4) and as claimed in Claims 1 to 6.

## Patentansprüche

1. Hydraulikkreislauf zum Zuführen eines Fluids zu einem Verbraucher (4), umfassend einen Behälter (3) für das Fluid, eine Pumpeinheit (2) zum Pumpen des Fluids vom Behälter (3) zum Verbraucher (4) sowie ein doppelwirkendes Ventil (42), das zwischen Behälter (3) und Verbraucher (4) parallel zur Pumpeneinheit (2) geschaltet ist und einen Ventilkörper (8) mit einer gegebenen Längsachse (9) aufweist, mit einem ersten und einem zweiten Absperrorgan (38, 29), die im Ventilkörper (8) verschiebbar und normalerweise jeweils in einer ersten, und einer zweiten, das Ventil (42) schließenden Position positioniert sind; wobei das erste Absperrorgan (38) verschiebbar ist zwischen der ersten geschlossenen Position und einer ersten, das Ventil (42) öffnenden Position für den Fall des Ausfalls der Pumpeneinheit (2), um die Zufuhr von Fluid aus dem Behälter (3) zum Verbraucher (4) sicherzustellen; und wobei das zweite Absperrorgan (29) verschiebbar ist zwischen einer zweiten Absperrposition in eine zweite offene Position, wenn der Druckwert des von der Pumpeneinheit (2) dem Verbraucher (4) zugeführten Fluids im Wesentlichen gleich einem Grenzwert ist, so dass Fluid aus der Pumpeneinheit (2) in den Behälter strömt, wobei das Ventil (42) weiterhin Stromumlenker (45, 46) umfasst, um das Fluid wenigstens teilweise dann umzulenken, wenn sich das zweite Absperrorgan (29) in der zweiten Offen-Position befindet, **dadurch gekennzeichnet, dass** die Stromumlenker (45, 46) einen Stromdeflektor (46) umfassen, der am Ventilkörper (8) befestigt ist und einen becherförmigen Körper (47) umfasst, der am Ventilkörper (8) befestigt ist, um zusammen mit dem Ventilkörper (8) eine Speicherkammer (49) für das Fluid zu bilden.

2. Hydraulischer Kreislauf nach Anspruch 1, **dadurch gekennzeichnet, dass** der Stromdeflektor (46) weiterhin wenigstens eine Bohrung (50) aufweist, die im becherförmigen Körper (47) vorgesehen ist, um die Speicherkammer (49) hydraulisch mit dem Behälter (3) zu verbinden.

3. Hydraulischer Kreislauf nach Anspruch 1 oder 2, wobei die Stromumlenker (36, 45, 46) eine Platte (45) umfassen, die vom zweiten Absperrorgan (29) getragen ist und senkrecht zur Achse (9) verläuft, und die sich innerhalb der Speicherkammer (49) befindet.

4. Hydraulischer Kreislauf nach einem der vorausgegangenen Ansprüche, **dadurch gekennzeichnet, dass** der Ventilkörper (8) im Wesentlichen becherförmig und axial durch eine Stirnwand (10) begrenzt ist, die im Wesentlichen senkrecht zur Achse (9) verläuft, und einen Sitz (11) aufweist, der der Stirnwand (10) koaxial zur Achse (9) angeformt ist und der sich mit dem zweiten Absperrorgan (29) in gleitendem Eingriff befindet und zur Achse (9) konvergiert.

5. Hydraulischer Kreislauf nach Anspruch 4, **dadurch gekennzeichnet, dass** wenigstens ein Teil des Sitzes (11) innen durch eine Ringfläche begrenzt ist, die zur Achse (9) konvex geformt ist.

6. Hydraulischer Kreislauf nach einem der Ansprüche 4 oder 5, **dadurch gekennzeichnet, dass** das zweite Absperrorgan (29) einen im Wesentlichen kegelstumpfförmigen Teil (32) aufweist, der dann mit dem Sitz (11) in fluiddichtem Eingriff steht, während sich das zweite Absperrorgan (29) in der zweiten Schließposition befindet.

7. Automobilsteuereinrichtung, umfassend ein hydraulisches Steuersystem (4) sowie einen hydraulischen Kreislauf zum Zuführen von Öl zum hydraulischen Steuersystem (4) gemäß einem der Ansprüche 1 bis 6.

## Revendications

1. Circuit hydraulique pour alimenter un dispositif pour un utilisateur (4) en liquide, le circuit hydraulique comprenant un réservoir (3) pour le liquide ; une unité de pompe (2) pour pomper le liquide depuis le réservoir (3) vers le dispositif pour un utilisateur (4) ; et une soupape à double fonction (42) ajustée entre le réservoir (3) et le dispositif pour un utilisateur (4), en parallèle avec l'unité de pompe (2), et comprenant un corps de soupape (8) présentant un axe longitudinal donné (9), et un premier et un second élément obturateur (38, 29) montés de manière à coulisser à l'intérieur du corps de soupape (8) et normalement positionnés respectivement dans une première et une seconde position fermée fermant la soupape (42) ; le premier élément obturateur (38) étant déplaçable depuis la première position fermée vers une première position ouverte ouvrant la soupape (42), dans l'éventualité d'une panne de l'unité de pompe (2), pour assurer la distribution du liquide depuis le réservoir (3) vers le dispositif pour un utilisateur (4) ; et le second élément obturateur (29) étant déplaçable depuis la seconde position fermée vers une seconde position ouverte lorsque la valeur de pression du liquide distribué par l'unité de pompe (2) au dispositif pour un utilisateur (4) est sensiblement égale à une valeur seuil, de manière à drainer le liquide depuis l'unité de pompe (2) vers le réservoir (3) ; la soupape (42) comprenant en outre des moyens de déviation de l'écoulement (45, 46) pour dévier au moins partiellement le liquide lorsque le second élément obturateur (29) est dans la seconde position ouverte ; et le circuit hydraulique étant **caractérisé en ce que** les moyens de déviation de l'écoulement (45, 46) comprennent un déflecteur d'écoulement (46) fixé sur ledit corps de soupape (8) et comprenant un corps en forme de tasse (47) ajusté sur le corps de soupape (8) pour définir, avec le corps de soupape (8), une chambre de stockage (49) pour ledit liquide.

2. Circuit hydraulique selon la revendication 1, dans lequel le déflecteur d'écoulement (46) comprend également au moins un orifice (50) formé à travers le corps en forme de tasse (47) pour relier la chambre de stockage (49) hydrauliquement au réservoir (3).

3. Circuit hydraulique selon la revendication 1 ou 2, dans lequel les moyens de déviation de l'écoulement (36 ; 45 ; 46) comprennent une plaque (45), qui est supportée par ledit second élément obturateur (29), est perpendiculaire au dit axe (9), et est logée à l'intérieur de la chambre de stockage (49).

4. Circuit hydraulique selon l'une quelconque des revendications précédentes, dans lequel le corps de soupape (8) est sensiblement en forme de tasse, est délimité axialement par une paroi d'extrémité (10) sensiblement perpendiculaire audit axe (9), et comprend un siège (11) formé à travers la paroi d'extrémité (10), de façon coaxiale par rapport audit axe (9), mis en prise de manière coulissante par le second élément obturateur (29), et convergeant avec ledit axe (9).

5. Circuit hydraulique selon la revendication 4, dans lequel au moins une partie du siège (11) est délimitée de manière interne par une surface annulaire ayant une convexité faisant face audit axe (9).

6. Circuit hydraulique selon la revendication 4 ou 5, dans lequel le second élément obturateur (29) comprend une partie sensiblement en forme de cône tronqué (32), qui met le siège (11) en prise de manière étanche lorsque le second élément obturateur (29) est dans la seconde position fermée.

7. Ensemble de direction automobile comprenant un système de direction hydraulique (4), et un circuit hydraulique pour distribuer de l'huile au système de direction hydraulique (4) et selon les revendications 1 à 6.
